(19) Europäisches Patentamt
European Patent Office
Office européen des brevets

(11) EP 1 171 519 B1

(12) **EUROPEAN PATENT SPECIFICATION**

(45) Date of publication and mention of the grant of the patent:
**11.02.2004 Bulletin 2004/07**

(21) Application number: **00920126.0**

(22) Date of filing: **05.04.2000**

(51) Int Cl.[7]: **C08K 5/00**, C08L 59/00
// (C08K5/00, 5:17),
C08K5:3445

(86) International application number:
**PCT/US2000/008951**

(87) International publication number:
**WO 2000/059993 (12.10.2000 Gazette 2000/41)**

# (54) POLYACETAL RESINS WITH REDUCED FORMALDEHYDE ODOR

POLYACETALHARZE MIT VERMINDERTEM FORMALDEHYDGERUCH

RESINES POLYACETALIQUES PRESENTANT UNE ODEUR DE FORMALDEHYDE REDUITE

(84) Designated Contracting States:
**DE FR GB IT**

(30) Priority: **07.04.1999 US 287432**

(43) Date of publication of application:
**16.01.2002 Bulletin 2002/03**

(73) Proprietor: **E.I. DU PONT DE NEMOURS AND COMPANY**
**Wilmington Delaware 19898 (US)**

(72) Inventors:
- **Mori, Hiroshi**
  **Utsunomiya-shi, Tochigi 321-0952 (JP)**
- **Kassal, Robert James**
  **Wilmington, DE 19808 (US)**
- **Shinohara, Kenichi**
  **Utsunomiya-shi, Tochigi 302-0003 (JP)**

(74) Representative: **Abitz, Walter, Dr.-Ing.**
**Patentanwälte Abitz & Partner,**
**Poschingerstrasse 6**
**81679 München (DE)**

(56) References cited:
**DE-A- 1 569 286** **GB-A- 996 252**

- **DATABASE WPI Section Ch, Week 199642 Derwent Publications Ltd., London, GB; Class A25, AN 1996-422125 XP002142074 & JP 08 208946 A (DAINICHISEIKA COLOR & CHEM MFG), 13 August 1996 (1996-08-13)**

EP 1 171 519 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

## BACKGROUND OF THE INVENTION

### Field of the Invention

The present invention relates to a novel polyacetal resin composition. and articles molded therefrom. which has excellent heat stability, air oven aging and moldability as well as a considerably reduced formaldehyde odor for packaged resins and molded parts.

### Background

Polyacetal resins, which are prepared by polymerizing a starting material mainly comprising formaldehyde monomer or trioxane, a trimer of formaldehyde, exhibit excellent mechanical and physical properties. such as tensile strength, stiffness, as well as fatigue resistance, sliding resistance, chemical resistance. and the like. The resins are used extensively in various applications as an engineering plastic material due to their excellent physical properties (such as mechanical and electrical properties) and chemical properties. However, the resins at times may evolve traces of formaldehyde from which they were made, even at room temperature. Similarly, molded articles made from polyacetal resins may also evolve traces of formaldehyde, which may make molded parts to be less desirable in some circumstances.

US Patent No. 5,866,671 discloses polyacetal compositions containing acidic hydantoin and imidazole derivatives with reduced odor levels.

There is still a demand for means to reduce the formaldehyde odor in polyacetal resins as well as that which may arise in articles molded from polyacetal resins.

DE-A-1,569,286 relates to polyacetal resins the hydrolytic stability of which being improved by the addition of certain $\alpha,\alpha$-disubsituted aliphatic amine.

The problem of formaldehyde odor is recognized in JP-A-82 08946 and the problem is solved by the incorporation of dicyandiamide.

## SUMMARY OF THE INVENTION

The present inventors have surprisingly found a novel composition comprising:

a) a polyacetal resin; and

b) a sufficient amount of at least an odor-reducing additive to reduce the formaldehyde concentration of the resin to less than 50%. The odor-reducing additive is selected from the group consisting of: (i) a low molecular weight primary or secondary water-soluble amino compound of low volatility, containing at least one amino group and two or more carbon atoms and having a weak basicity of Pkb in the range of 2 - 8: (ii) succinimide; (iii) anthranilic acid; (iv) 4-amino benzoic acid, and mixtures thereof.

The invention also relates to a novel composition comprising: a) a polyacetal resin; a sufficient amount of at least b) an odor-reducing additive selected from the group consisting of: (i.) a low molecular weight primary or secondary water-soluble amino compound of low volatility, containing at least one amino group and two or more carbon atoms and having a weak basicity ofPkb in the range of 2 - 8; (ii) succinimide: (iii) anthranilic acid; (iv) 4-amino benzonic acid: and c) a weak acidic organic cyclic compound having an active imino. to provide a synergistic effect in reducing the formaldehyde odor of at least in half.

## DETAILED DESCRIPTION OF THE INVENTION

### Polyacetal Resins

The polyacetal base resin that may be used in the compositions of the present invention is a high-molecular weight polymer comprised of repeating oxymethylene units (-CH2O-) which may be selected from among polyoxymethylene homopolymers, copolymers (including block copolymers) and terpolymers comprising oxymethylene units and a minor amount of other constituent units.

The polyacetals used in the compositions of the present invention may, moreover. be linear, branched or crosslinked, with terminal groups thereof being either not protected or being protected. The polyacetal resin will generally have a number average molecular weight in the range of 5,000 to 100,000, preferably 10,000 to 70.000. The

molecular weight can conveniently be measured by gel permeation chromatography in m-cresol at 160°C. using a Du Pont PSM bimodal column kit with nominal pore size of 60 and 1000 Angstrom.

The polyacetal used in the present invention can be either a homopolymer, a copolymer or a mixture thereof. The preferred homopolymer is generally prepared by the polymerization of anhydrous formaldehyde or a cyclic trimer thereof, i.e., trioxane. Generally, the homopolymer is stabilized against thermal decomposition by end-capping with a suitable moiety having greater stability as compared to the oxymethylene units. The preferred copolymer on the other hand is a high-molecular weight polymer comprising between about 85 to 99.9% of repeating oxymethylene units randomly interspersed with higher oxyalkylene units (e.g., having two or more adjacent carbon atoms).

Copolymers can contain one or more comonomers, such as those generally used in preparing polyacetal compositions. Comonomers more commonly used include alkylene oxides of 2-12 carbon atoms and their cyclic addition products with formaldehyde. The quantity of comonomer will not be more than 20 weight percent. preferably not more than 15 weight percent, and most preferably about 2 weight percent. The most preferred comonomer is ethylene oxide. Generally polyacetal homopolymer is preferred over copolymer because of its greater stiffness. Preferred polyacetal homopolymers include those whose terminal hydroxyl groups have been end-capped by a chemical reaction to form ester or ether groups, preferably acetate or methoxy groups, respectively.

Additives

The odor-reducing additives of the present invention include: i) a water-soluble, low molecular weight primary or secondary amino compound, containing at least one amino group and two or more carbon atoms and having a weak basicity of Pkb in the range of 2 - 8; (ii) succinimide; (iii) anthranilic acid; (iv) 4-amino benzonic acid, and mixtures thereof.

With respect to the water-soluble, low molecular weight primary or secondary amino compounds containing at least one amino group and two or more carbon atoms, no particular limitation is imposed on the number of amino group(s). The amino compounds can be an aliphatic, alicyclic, aromatic or heterocyclic group having two or more carbon atoms. The amino compounds may contain one or more groups other than amino group(s), for example, hydroxyl, ester, ether, carboxyl, carbonyl, amido, imido, sulfonic, carboxamido, imino and/or unsaturated groups.

The water-soluble, low molecular weight primary or secondary amino compounds are characterized by being weak bases, i.e., having have a basicity pkb's ranging from about 2 to 8, preferably being very weak bases, i.e., having have a basicity pkb's ranging from about 4 to 8.

The water-soluble, low molecular weight primary or secondary amino compounds are further characterized as having a low volatility, i.e.. the boiling point of the amino compounds is as follows: $T_{bp} > T_m$-60C, where $T_{bp}$ is the boiling point of the amino compounds and $T_m$ is the melting point of the polyacetal base resin.

Specific examples of such water-soluble, low molecular weight primary or secondary amino compounds include, but are not limited to, e.g., monoethanolamine, diethanolamine, alkyl aminobenzoates such as ethyl p-aminobenzoate, methyl anthranylate and butyl m-aminobenzoate.

Ethyl p-aminobenzoate is preferred for use as water-soluble, low molecular weight primary or secondary amino compound in accordance with this invention.

The amount of the odor-reducing additives to added to the compositions of the present invention should be in a sufficient amount to reduce the formaldehyde level of the resin or its molded parts in half. The amount of additives is about 0.01 -10 in parts by weight, preferably 0.02 - 5 by weight, and most preferably 0.05 - 2 parts by weight, per 100 parts by weight of the polyacetal resin.

Other Additives

The composition of the present invention can further contain, one or more ordinary additives including: lubricants; nucleating agents: mold release agents: antistatic agents; surfactants; organic polymeric materials; inorganic, organic, fibrous. granular or platy fillers, anti-oxidants, pigments, colorants, carbon black. reinforcing agents and fillers such as a glass fiber, etc., in such an amount as not to negate the effects of this invention.

Representative lubricants that may be used include, but are not limited to. silicone types such as dimethylpolysiloxanes and their modifications; oleic acid amides; alkyl acid amides, e.g., stearic acid amide types; bis-fatty acid amid type lubricants such as bisamides; non-inonic surfactant type lubricants; hydrocarbon type lubricants waxes, chlorohydrocarbons, flourocarbons; fatty acid type lubricants including oxy-fatty acid; ester-type lubricants including lower alcohol esters of fatty acids; alcohol type lubricants including polyyalents, polyglycols. polyglycerols; and metal soaps such as lauric acid. stearic acid. etc.. with metals.

Also, it is desirable to add antioxidant to prevent oxidative deterioration of the resin. Hindered phenol type antioxidants are preferred, and those antioxidants with melting point higher than 100°C, especially above 120°C, are most preferred.

It is also desirable to add heat stabilizers to the composition of this invention as formaldehyde scavengers

such as: polyamide resins. amide compounds, urea derivatives and triazine derivatives.

Suitable polyamide resins include polyamide compounds, especially nylon terpolymers, hydroxy containing polymers, and nonmelting nitrogen or hydroxy containing compounds, e.g., polyamide 6, polyamide 6/12 copolymer, polyamide 6/66/610 terpolymer, polyamide 6/66/612 terpolymer, ethylene-vinyl alcohol copolymer, acrylamide (co)polymer, acrylamide/N,N-methylenebis-acrylamide copolymer, stearic acid monoglyceride and poly beta alanine and the like.

Suitable amide compounds are stearic acid amide, oleic acid amide, erucic acid amide, ethylenediamine-distearic acid amide, ethylenediamine-dibehenic acid amide, hexamethylenediamine-distearic acid amide, ethylenediamine-dioleic acid amide. ethylenediamine-dierucic acid amide, xylylenediamine-dierucic acid amide, di(xylylenediamine-stearic acid amide)sebacic acid and the like.

Suitable urea derivatives are N-phenylurea, N,N'-diphenylurea, N-phenylthiourea, N,N'-diphenylthiourea and the like.

Suitable triazine derivatives are melamine, benzoguanamine, N-phenylmelamine, N,N'-diphenylmelemine, N-methylolmelamine, N,N'-trimethylolmelamine, 2,4-diamino-6-cyclohexyltriazine, and the like.

These heat stabilizer may be used individually or in combination. Of these, nylon 66, poly beta - alanine, ethylenediamine-distearic acid amide, ethylenediamine-dibehenic acid amide, ethylenediamine-dierucic acid amide, di(xylylenediamine-stearic acid amide)sebacic acid amide are preferred.

Preparation

The compositions of the present invention can be prepared by any means of compounding. The additives can be added as dry powders, as concentrates ("master-batch"), as dispersions, or as solutions. One preferred method of incorporation involves adding the odor-reducing additives to polyacetal resin pellets to coat the pellets, and thereby mixing the mixtures in an extruder or injection molder, in addition, the odor-reducing additives may be compounded into the polyacetal resin at the same time that other additives. such as thermal stabilizers, antioxidants, fillers, etc., are compounded therein. The additives may be added in the form of particle or in the molten state.

Molded parts of these polyacetal resin compositions may be formed by any molding process conventional in the plastics-forming art, including compression molding, vacuum forming, injection molding, extrusion molding, blow molding, rotary molding, melt spinning, and heat molding. Injection molding is especially preferred. During injection molding of the claimed compositions, mold deposits attached to the mold were evaluated visually and were hardly observed or not found at all.

Examples

In the Examples and Comparative Examples, the characteristics of the acetal resin compositions and moldings were determined as follows:

Thermal Stability Test. Two grams of resin pellets were melted for 30 minutes at 250°C in a nitrogen atmosphere. The formaldehyde gas generated by the decomposition of the resin was introduced into a 4% aqueous sodium bisulfite solution, followed by titration with a 0.1 N hydrochloric acid (HCl). The amount of formaldehyde gas generated (TEF) is expressed by the following formula:

$$\text{Amount of formaldehyde formed (\%)} = 30.03\ NV/S \times 100$$

wherein V was the amount of HCl, in ml, required for titrating after 30 minutes, N was the normality, in ml, of HCl, S was the amount of sample, in grams, and 30.03 was the molecular weight of formaldehyde.

Odor Test I - Pellets: 100 g of resin pellets were sealed in a 300 ml polyethylene containers and kept at various temperatures: room temperature, 50°C and 80°C. At the start of the test, then after 1 and 2 hours respectively, 10 ml of gas was removed from the containers using a syringe and formaldehyde concentration was measured using a gas-phase measuring device made by Lion Company called Formaldemeter Mark II.

Odor Test 2 - Pellets: Resin pellets were stored at room temperature in sealed 50-1b. bags made out of polyethylene. Gas samples were tested by removing 1cc. gas from the sealed bags and formaldehyde concentration was measured using the gas-phase measuring device Formaldemeter Mark II.

Odor Test 3 - Molded Tensile-bar tests: 1/16" Tensile-bars were molded from a control composition as well as the claimed compositions. The tensile bars were stored at room temperature in sealed 1 gallon polyethylene containers. Gas samples were tested by removing 1 cc. gas from the sealed containers and formaldehyde levels were measured using a Formaldemeter Mark II.

Odor Test 4 - Molded part test: molded parts were molded from the claimed compositions, kept in sealed 300

ml polyethylene containers at various temperatures: 50°C and 80°C. Gas samples were tested by removing 1cc. gas from the sealed containers and formaldehyde levels were measured using a Formaldemeter Mark II by the Lion Company.

Components: The polyacetal resins used in the Examples below were:

1. Polyacetal A available from E. I. du Pont de Nemours and Company of Wilmington. Delaware. USA ("DuPont"), having a number average molecular weight of about 37,000;
2. Polyacetal B available from DuPont, having a number average molecular weight of about 30,000;
3. Polyacetal C also available from DuPont, having a number average molecular weight of about 77,000; and
4. Polyacetal D, available from Polyplastics, Japan, under the tradename Duracon® M25.

The additives used in the Examples are as listed in the tables below. In the Examples. THAM is tris(hydroxymethyl)aminomethane, EPA is ethyl p-aminobenzoate, AEPD is 2-amino-2-ethyl-propanediol and AMP is 2-amino-2-methyl-propanol.

Preparations: The polyacetal resin was mixed with the additives in an extruder and the resultant resin was pelletized, and in some instances, formed into molded parts. The samples were evaluated by the Thermal Heat Stability test and the various Odor Tests. Comparative Examples were those obtained by processing similar polyacetal without any odor-reducing additives at all.

The results of evaluation are listed in the tables below, demonstrating that the examples using the additives of the present invention were able to suppress the formaldehyde odors in resin without severely adversely affecting the melt stability of the resins.

In the first set of experiments, polyacetal B was used and the formaldehyde levels were measured using the Thermal Stability test as well as the Odor Test I (pellets in 300 ml PE bottle):

Table 1

| Example | Wt. % additive | Additive | TEF | ppm CHCHO ppm initial | ppm CHCHO 50°C/ 1hr | ppm CHCHO 80°C/ 1hr |
|---|---|---|---|---|---|---|
| Com 1-1 | - | None | 0.15 | 19.5 | 84 | > 85 |
| 1-2 | 0.05 | EPA | 0.13 | 6.8 | 30.9 | 75.4 |
| 1-3 | 0.2 | EPA | 0.12 | 0.5 | 3.3 | 13.8 |
| 1-4 | 0.5 | EPA | 0.13 | 0.3 | 1.3 | 7.3 |
| 1-5 | 0.2 | THAM | 0.23 | 0.5 | 1.6 | 3.0 |

In the next set of experiments, polyacetal A was used and the formaldehyde levels were measured using the Thermal Stability test as well as the Odor Test 2 (50 lb. PE sealed bags).

Table 2

| Example | Wt. % additive | Additives | TEF | Ppm CHCHO 19°C /3 day | Ppm CHCHO 23°C /7 day | ppm CHCHO 24°C/23 day |
|---|---|---|---|---|---|---|
| Compare 2-1 | 0.0 | None | 0.47 | 34.4 | 56.0 | 44.8 |
| 2-2 | 0.2 | THAM | 0.83 | 0.3 | 0.4 | 0.4 |
| 2-3 | 0.2 | Theophyline | 2.59 | 2.9 | 0.7 | 1.5 |
| 2-4 | 0.2 | Succinimide | 1.12 | 0.9 | 1.1 | 1.2 |
| 2-5 | 0.2 | Anthranilamide | 1.33 | 0.3 | 0.3 | 0.5 |
| 2-6 | 0.2 | Glycine anhydride | - | 7.6 | 12.0 | 15.1 |
| 2-7 | 0.2 | Anthranilic acid | 2.37 | 0.3 | 1.2 | 2.0 |
| 2-8 | 0.2 | 4-amino benzoic acid | - | 1.6 | 5 | 13.1 |
| 2-9 | 0.2 | Uracil | 0.92 | 1.7 | 3.2 | 6.1 |

Table 2 (continued)

| Example | Wt. % additive | Additives | TEF | Ppm CHCHO 19°C /3 day | Ppm CHCHO 23°C /7 day | ppm CHCHO 24°C/23 day |
|---|---|---|---|---|---|---|
| 2-10 | 0.2 | Barbituric acid | - | 0.3 | 0.5 | 0.5 |

In the third set of experiments, polyacetals C and D were used and the formaldehyde levels were measured via Odor Tests 1 (pellets in 300 ml PE bottle):

Table 3

| Example | Polyacetal Resin | Wt. % Additive | Additive | ppm CH2O 23C/ 1hr | ppm CH2O 50C/ 1hr | ppm CH2O 80C/ 1hr |
|---|---|---|---|---|---|---|
| Com 3-1 | C | - | None | 12.7 | 70.8 | >86 |
| 3-2 | C | 0.05 | THAM | 0.4 | 1.7 | 1.0 |
| 3-3 | C | 0.05 | AMP | 1.2 | 12.2 | 63.8 |
| 3-4 | C | 0.05 | AEPD | 0.4 | 2.0 | 2.8 |
| 3-5 | D | 0.05 | THAM | 0.1 | 1.9 | 2.0 |

In table 4, polyacetal A was used and the formaldehyde levels were measured via Odor Tests 2 (50 lb. sealed bags) and 3 (tensile-bar samples). In some of the examples. an acidic organic cyclic compound having an active imino such as 5,5-dimethylhydantoin (DMH) was added to the additive of the present invention.

The combination of the odor-reducing additives of the invention with the weak acidic imino was found to have a synergistic effect in reducing formaldehyde odor:

Table 4

| Example | Wt. % additive | Additive | TEF | ppm CH2O 3 days | ppm CH2O 7 days | ppm CH2O 21days | ppmCH2O T-Bars 1day |
|---|---|---|---|---|---|---|---|
| Com 4-1 | - | None | 0.69 | 34.4 | 95.6 | 80 | 383.2 |
| 4-2 | 0.05 | DMH | 0.63 | 5.1 | 5.3 | 3.8 | 147 |
| 4-3 | 0.1 | DMH | 0.56 | 5.2 | 3.3 | 3 | 25.6 |
| 4-4 | 0.2 | DMH | 0.64 | 2.6 | 1.8 | 1.8 | 16 |
| 4-5 | 0.2 | THAM | - | - | 0.4 | 0.4 | 16 |
| 4-6 | 0.1 | 50% THAM/ 50% DMH | 0.85 | 0.3 | 0.3 | 0.4 | 12.6 |
| 4-7 | 0.2 | 50% THAM/ 50% DMH | 0.73 | 0.3 | 0.3 | 0.3 | 7.1 |

In another set of examples, polyacetal B was used and the formaldehyde levels were measured using Odor Test 1 (pellets in PE bottles):

Table 5

| Example | Wt. % additive | Additive | ppm CH2O 23C/ 1hr | ppm CH2O 50C/ 1hr | ppm CH2O 80C/ 1hr |
|---|---|---|---|---|---|
| Compare 5-1 | - | None | 19.5 | 84 | > 85 |
| 5-2 | 0.05 | ethyl p-aminobenzoate | 6.8 | 30.9 | 75.4 |
| 5-3 | 0.2 | ethyl p-aminobenzoate | 0.5 | 3.3 | 13.8 |

Table 5 (continued)

| Example | Wt. % additive | Additive | ppm CH2O 23C/ 1hr | ppm CH2O 50C/ 1hr | ppm CH2O 80C/ 1hr |
|---|---|---|---|---|---|
| 5-4 | 0.5 | ethyl p-aminobenzoate | 0.3 | 1.3 | 7.3 |
| 5-5 | 0.2 | DMH | 0.8 | 3.9 | 16.6 |
| 5-6 | 0.2 | THAM | 0.5 | 1.6 | 3.0 |
| 5-7 | 0.1 | THAM | 0.5 | 1.4 | 3.3 |
| 5-8 | 0.1 | 50% THAM/50% DMH | 0.5 | 4.7 | 11.7 |

The examples were repeated with 30 g of molding parts from polyacetal B, and the formaldehyde levels were measured using Odor Test 4 (molded parts in 300 ml PE bottle), confirming the synergistic effect of a combination of the odor-reducing additives of the invention with a weak acidic organic cyclic compound having an active imino such as 5,5-dimethylhydantoin (DMH):

Table 6

| Example | Wt. %additive | Additive | Ppm CH2O 50C 1hr | ppm CH2O 80 C 1 hr |
|---|---|---|---|---|
| Compare 6-1 | - | None | 53.8 | > 85 |
| 6-2 | 0.05 | Ethyl p-aminobenzoate | 58.7 | > 85 |
| 6-3 | 0.2 | Ethyl p-aminobenzoate | 45.2 | 60.9 |
| 6-4 | 0.5 | Ethyl p-aminobenzoate | 35.7 | 32.4 |
| 6-5 | 0.2 | DMH | 30.6 | 42.9 |
| 6-6 | 0.2 | THAM | 67.1 | > 85 |
| 6-7 | 0.1 | THAM | 83 | > 85 |
| 6-8 | 0.1 | 50% THAM/ 50% 5.5-DMH | 10.4 | 38.1 |

## Claims

1. A polyacetal resin composition comprising (a) a polyacetal resin, and (b) one or more members of the group of odor-reducing additives consisting of

    (i) succinimide; and
    (ii) a low molecular weight primary or secondary water-soluble amino compound of low volatility, containing at least one amino group and two or more carbon atoms, and having a pKb in the range of 2-8, excepting and excluding those amino compounds described by the formula

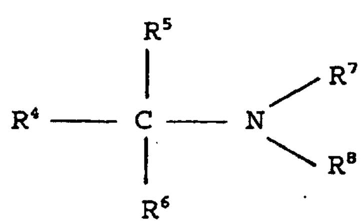

wherein $R^4$, $R^5$ and $R^6$ are selected from the class consisting of hydroxyalkyl groups having 1~4 carbon atoms and alkyl groups having 1~9 carbon atoms, and the $R^7$ and $R^8$ groups are selected from the class consisting of hydrogen and alkyl groups having 1~4 carbon atoms;

wherein the amino compound of low volatility is **characterized by** $T_{bp} > T_m$ -60°C, where $T_{bp}$ is the boiling

point of the amino compound and $T_m$ is the melting point of the polyacetal resin; and

wherein the composition is **characterized by** a formaldehyde concentration at room temperature that is less than about 50% of the formaldehyde concentration of the polyacetal resin itself.

**2.** A composition according to Claim 1 wherein the amino compound has a pKb in the range of about 4-8.

**3.** A composition according to Claim 1 wherein the amino compound is selected from the group consisting of diethanolamine, ethyl *p*-aminobenzoate, methyl anthranylate, butyl *m*-aminobenzoate, and mixtures thereof.

**4.** A composition according to Claim 1 wherein the amino compound is ethyl *p*-aminobenzoate.

**5.** A composition according to Claim 1 wherein the odor-reducing additive is present in the composition in an amount of about 0.01～10 parts by weight, per 100 parts by weight of the polyacetal resin.

**6.** A composition according to Claim 1 wherein the polyacetal resin is an acetal copolymer.

**7.** A composition according to Claim 1 further comprising an organic cyclic compound having an active imino group according to the formula

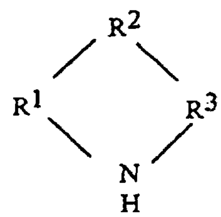

wherein $R^1$, $R^2$ and $R^3$ are divalent organic radicals.

**8.** A composition according to Claim 1 further comprising at least one additive selected from the group consisting of nucleating agents, mold release agents, surfactants, stabilizers, impact modifiers, reinforcing agents, anti-static agents, antioxidants, plasticizers, lubricants, fillers and colorants.

**9.** A polyacetal resin composition comprising (a) a polyacetal resin, and (b) an odor reducing additive selected from anthranilic acid, 4-amino benzoic acid, and a mixture thereof, wherein the composition is **characterized by** a formaldehyde concentration at room temperature that is less than about 50% of the formaldehyde concentration of the polyacetal resin itself.

**10.** A composition according to Claim 9 wherein the odor-reducing additive is present in the composition in an amount of about 0.01～10 parts by weight, per 100 parts by weight of the polyacetal resin.

**11.** A composition according to Claim 9 wherein the polyacetal resin is an acetal copolymer.

**12.** A composition according to Claim 9 further comprising an organic cyclic compound having an active imino group according to the formula

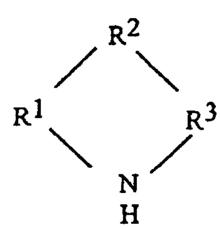

wherein $R^1$, $R^2$ and $R^3$ are divalent organic radicals.

**13.** A composition according to Claim 9 further comprising at least one additive selected from the group consisting of nucleating agents, mold release agents, surfactants, stabilizers, impact modifiers, reinforcing agents, anti-static agents, antioxidants, plasticizers, lubricants, fillers and colorants.

**14.** A shaped article produced from a composition according to Claim 1.

**15.** A shaped article produced from a composition according to Claim 9.

**16.** A method for reducing the formaldehyde concentration of a part molded from a polyacetal resin, comprising

(a) forming a composition comprising (i) a polyacetal resin, and (ii) one or more members of the group of odor-reducing additives consisting of

(A) succinimide; and
(B) a low molecular weight primary or secondary water-soluble amino compound of low volatility, containing at least one amino group and two or more carbon atoms, and having a pKb in the range of 2-8, excepting and excluding those amino compounds described by the formula

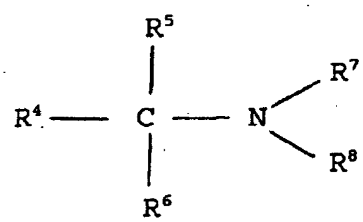

wherein $R^4$, $R^5$ and $R^6$ are selected from the class consisting of hydroxyalkyl groups having 1-4 carbon atoms and alkyl groups having 1~9 carbon atoms, and the $R^7$ and $R^8$ groups are selected from the class consisting of hydrogen and alkyl groups having 1-4 carbon atoms;
wherein the amino compound of low volatility is **characterized by** $T_{bp} > T_m$ -60°C, where $T_{bp}$ is the boiling point of the amino compound and $T_m$ is the melting point of the polyacetal resin; and
wherein the composition is **characterized by** a formaldehyde concentration at room temperature that is less than about 50% of the formaldehyde concentration of the polyacetal resin itself; and
(b) molding the part from the composition.

**17.** A method according to Claim 16 further comprising the step of selecting as the amino compound a member of the group consisting of diethanolamine, ethyl *p*-aminobenzoate, methyl anthranylate, butyl *m*-aminobenzoate, and mixtures thereof.

**18.** A method according to Claim 16 further comprising the step of selecting as the amino compound ethyl *p*-aminobenzoate.

**19.** A method for reducing the formaldehyde concentration of a part molded from a polyacetal resin, comprising

(a) forming a composition comprising (i) a polyacetal resin, and (ii) anthranilic acid, 4-amino benzoic acid, or a mixture thereof; wherein the composition is **characterized by** a formaldehyde concentration at room temperature that is less than about 50% of the formaldehyde concentration of the polyacetal resin itself; and
(b) molding the part from the composition.

## Patentansprüche

**1.** Polyacetalharzzusammensetzung, umfassend (a) ein Polyacetalharz und (b) einen oder mehrere Bestandteile aus der Gruppe von geruchsvermindemden Zusatzstoffen, bestehend aus

(i) Succinimid; und

(ii) einer primären oder sekundären wasserlöslichen Aminoverbindung mit niedrigem Molekulargewicht mit geringer Flüchtigkeit, enthaltend mindestens eine Aminogruppe und zwei oder mehrere Kohlenstoffatome, und mit einem pKb in dem Bereich von 2-8, ausgenommen und ausschließend diejenigen Aminoverbindungen, beschrieben durch die Formel

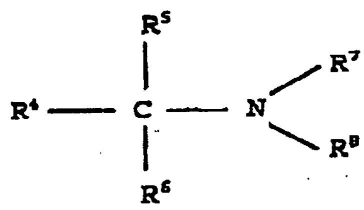

wobei $R^4$, $R^5$ und $R^6$ aus der Klasse, bestehend aus Hydroxyalkylgruppen mit 1-4 Kohlenstoffatomen und Alkylgruppen mit 1-9 Kohlenstoffatomen, ausgewählt sind und die $R^7$- und $R^8$-Gruppen aus der Klasse, bestehend aus Wasserstoff und Alkylgruppen mit 1-4 Kohlenstoffatomen, ausgewählt sind;

wobei die Aminoverbindung mit geringer Flüchtigkeit durch $T_{Sdp.} > T_{Smp.} - 60°C$ gekennzeichnet ist, wo $T_{Sdp.}$ der Siedepunkt der Aminoverbindung ist und $T_{Smp.}$ der Schmelzpunkt des Polyacetalharzes ist; und

wobei die Zusammensetzung durch eine Formaldehydkonzentration bei Raumtemperatur gekennzeichnet ist, die geringer als etwa 50% der Formaldehydkonzentration des Polyacetalharzes selbst ist.

2. Zusammensetzung nach Anspruch 1, wobei die Aminoverbindung einen pKb in dem Bereich von etwa 4-8 hat.

3. Zusammensetzung nach Anspruch 1, wobei die Aminoverbindung aus der Gruppe, bestehend aus Diethanolamin, Ethyl-*p*-aminobenzoat, Methylanthranilat, Butyl-m-aminobenzoat und Gemischen davon, ausgewählt ist.

4. Zusammensetzung nach Anspruch 1, wobei die Aminoverbindung Ethyl-*p*-aminobenzoat ist.

5. Zusammensetzung nach Anspruch 1, wobei der geruchsvermindernde Zusatzstoff in der Zusammensetzung in einem Anteil von etwa 0,01-10 Gewichtsteilen pro 100 Gewichtsteilen des Polyacetalharzes vorhanden ist.

6. Zusammensetzung nach Anspruch 1, wobei das Polyacetalharz ein Acetalcopolymer ist.

7. Zusammensetzung nach Anspruch 1, weiterhin umfassend eine organische cyclische Verbindung mit einer aktiven Iminogruppe entsprechend der Formel

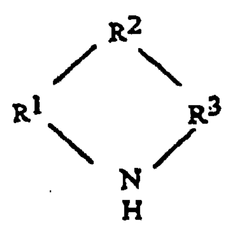

wobei $R^1$, $R^2$ und $R^3$ zweiwertige organische Reste sind.

8. Zusammensetzung nach Anspruch 1, weiterhin umfassend mindestens einen Zusatzstoff, ausgewählt aus der Gruppe, bestehend aus keimbildenden Mitteln, Formtrennmitteln, grenzflächenaktiven Mitteln, Stabilisatoren, schlagzähmachenden Zusatzstoffen, Verstärkungsmitteln, Antistatikmitteln, Antioxidationsmitteln, Weichmachern, Schmiermitteln, Füllstoffen und Färbemitteln.

9. Polyacetalharzzusammensetzung, umfassend (a) ein Polyacetalharz und (b) einen geruchsvermindernden Zusatzstoff, ausgewählt aus Anthranilsäure, 4-Aminobenzoesäure und einem Gemisch davon, wobei die Zusammensetzung durch eine Formaldehydkonzentration bei Raumtemperatur gekennzeichnet ist, die geringer als etwa 50% der Formaldehydkonzentration des Polyacetalharzes selbst ist.

**10.** Zusammensetzung nach Anspruch 9, wobei der geruchsvermindemde Zusatzstoff in der Zusammensetzung in einem Anteil von etwa 0,01-10 Gewichtsteilen pro 100 Gewichtsteilen des Polyacetalharzes vorhanden ist.

**11.** Zusammensetzung nach Anspruch 9, wobei das Polyacetalharz ein Acetalcopolymer ist.

**12.** Zusammensetzung nach Anspruch 9, weiterhin umfassend eine organische cyclische Verbindung mit einer aktiven Iminogruppe entsprechend der Formel

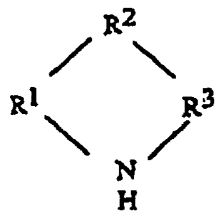

wobei $R^1$, $R^2$ und $R^3$ zweiwertige organische Reste sind.

**13.** Zusammensetzung nach Anspruch 9, weiterhin umfassend mindestens einen Zusatzstoff, ausgewählt aus der Gruppe, bestehend aus keimbildenden Mitteln, Formtrennmitteln, grenzflächenaktiven Mitteln, Stabilisatoren, schlagzähmachenden Zusatzstoffen, Verstärkungsmitteln, Antistatikmitteln, Antioxidationsmitteln, Weichmachern, Schmiermitteln, Füllstoffen und Färbemitteln.

**14.** Formgegenstand, hergestellt aus einer Zusammensetzung nach Anspruch 1.

**15.** Formgegenstand, hergestellt aus einer Zusammensetzung nach Anspruch 9.

**16.** Verfahren zur Verringerung der Formaldehydkonzentration eines Teils, geformt aus einem Polyacetalharz, umfassend

(a) Erzeugen einer Zusammensetzung, umfassend (i) ein Polyacetalharz und (ii) einen oder mehrere Bestandteile aus der Gruppe von geruchsvermindernden Zusatzstoffen, bestehend aus

(A) Succinimid; und
(B) einer primären oder sekundären wasserlöslichen Aminoverbindung mit niedrigem Molekulargewicht mit geringer Flüchtigkeit, enthaltend mindestens eine Aminogruppe und zwei oder mehrere Kohlenstoffatome, und mit einem pKb in dem Bereich von 2-8, ausgenommen und ausschließend diejenigen Aminoverbindungen, beschrieben durch die Formel

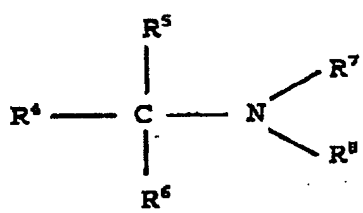

wobei $R^4$, $R^5$ und $R^6$ aus der Klasse, bestehend aus Hydroxyalkylgruppen mit 1—4 Kohlenstoffatomen und Alkylgruppen mit 1-9 Kohlenstoffatomen, ausgewählt sind und die $R^7$- und $R^8$-Gruppen aus der Klasse, bestehend aus Wasserstoff und Alkylgruppen mit 1-4 Kohlenstoffatomen, ausgewählt sind;
wobei die Aminoverbindung mit geringer Flüchtigkeit durch $T_{Sdp.} > T_{Smp.}$ - 60°C gekennzeichnet ist, wo $T_{Sdp.}$ der Siedepunkt der Aminoverbindung ist und $T_{Smp.}$ der Schmelzpunkt des Polyacetalharzes ist; und
wobei die Zusammensetzung durch eine Formaldehydkonzentration bei Raumtemperatur gekennzeichnet ist, die geringer als etwa 50% der Formaldehydkonzentration des Polyacetalharzes selbst ist; und

(b) Formen des Teils aus der Zusammensetzung.

**17.** Verfahren nach Anspruch 16, weiterhin umfassend den Schritt, als Aminoverbindung einen Bestandteil aus der Gruppe, bestehend aus Diethanolamin, Ethyl-*p*-aminobenzoat, Methylanthranilat, Butyl-*m*-aminobenzoat und Gemischen davon, auszuwählen.

**18.** Verfahren nach Anspruch 16, weiterhin umfassend den Schritt, als Aminoverbindung Ethyl-*p*-aminobenzoat auszuwählen.

**19.** Verfahren zur Verringerung der Formaldehydkonzentration eines Teils, geformt aus einem Polyacetalharz, umfassend

(a) Erzeugen einer Zusammensetzung, umfassend (i) ein Polyacetalharz und (ii) Anthranilsäure, 4-Aminobenzoesäure oder ein Gemisch davon; wobei die Zusammensetzung durch eine Formaldehydkonzentration bei Raumtemperatur gekennzeichnet ist, die geringer als etwa 50% der Formaldehydkonzentration des Polyacetalharzes selbst ist; und

(b) Formen des Teils aus der Zusammensetzung.

## Revendications

**1.** Composition de résine de polyacétal comprenant (a) une résine de polyacétal et (b) un ou plusieurs éléments du groupe d'additifs réducteurs d'odeur constitué:

(i) de succinimide; et
(ii) d'un composé amino soluble dans l'eau primaire ou secondaire à bas poids moléculaire de basse volatilité, contenant au moins un groupe amino et deux atomes de carbone ou plus et présentant un pKb dans l'intervalle de 2-8, à l'exception de et en excluant ces composés amino décrits par la formule:

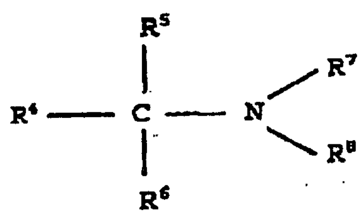

dans laquelle $R^4$, $R^5$ et $R^6$ sont choisis dans la classe constituée de groupes hydroxyalkyles contenant 1-4 atomes de carbone et de groupes alkyles contenant 1-9 atomes de carbone, et les groupes $R^7$ et $R^8$ sont choisis dans la classe constituée d'hydrogène et de groupes alkyles contenant 1-4 atomes de carbone;

dans laquelle le composé amino de basse volatilité est **caractérisé par** $T_{bp} > T_m - 60°C$, où $T_{bp}$ est le point d'ébullition du composé amino et $T_m$ est le point de fusion de la résine de polyacétal; et

dans laquelle la composition est **caractérisée par** une concentration de formaldéhyde à la température ambiante qui est inférieure à environ 50% de la concentration de formaldéhyde de la résine de polyacétal seule.

**2.** Composition suivant la revendication 1, dans laquelle le composé amino présente un pKb dans l'intervalle d'environ 4-8.

**3.** Composition suivant la revendication 1, dans laquelle le composé amino est choisi dans le groupe constitué de diéthanolamine, de *p*-aminobenzoate d'éthyle, d'anthranylate de méthyle, de *m*-aminobenzoate de butyle et de mélanges de ceux-ci.

**4.** Composition suivant la revendication 1, dans laquelle le composé amino est le p-aminobenzoate d'éthyle.

**5.** Composition suivant la revendication 1, dans laquelle l'additif réducteur d'odeur est présent dans la composition dans une quantité d'environ 0,01-10 parties en poids, pour 100 parties en poids de la résine de polyacétal.

**6.** Composition suivant la revendication 1, dans laquelle la résine de polyacétal est un copolymère d'acétal.

**7.** Composition suivant la revendication 1, comprenant en outre un composé cyclique organique possédant un groupe imino actif suivant la formule:

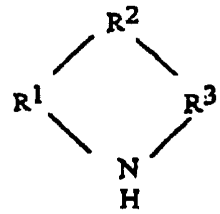

dans laquelle $R^1$, $R^2$ et $R^3$ sont des radicaux organiques divalents.

**8.** Composition suivant la revendication 1, comprenant en outre au moins un additif choisi dans le groupe constitué d'agents de nucléation, d'agents de démoulage, de tensioactifs, de stabilisants, d'agents antichoc, d'agents de renforcement, d'agents antistatiques, d'antioxydants, de plastifiants, de lubrifiants, de charges et de colorants.

**9.** Composition de résine de polyacétal comprenant (a) une résine de polyacétal et (b) un additif réducteur d'odeur choisi parmi l'acide anthranilique, l'acide 4-aminobenzoïque et un mélange de ceux-ci, dans laquelle la composition est **caractérisée par** une concentration de formaldéhyde à la température ambiante qui est inférieure à environ 50% de la concentration de formaldéhyde de la résine de polyacétal seule.

**10.** Composition suivant la revendication 9, dans laquelle l'additif réducteur d'odeur est présent dans la composition dans une quantité d'environ 0,01-10 parties en poids, pour 100 parties en poids de la résine de polyacétal.

**11.** Composition suivant la revendication 9, dans laquelle la résine de polyacétal est un copolymère d'acétal.

**12.** Composition suivant la revendication 9, comprenant en outre un composé cyclique organique possédant un groupe imino actif suivant la formule:

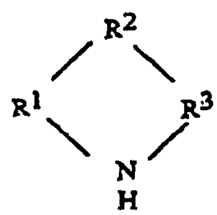

dans laquelle $R^1$, $R^2$ et $R^3$ sont des radicaux organiques divalents.

**13.** Composition suivant la revendication 9, comprenant en outre au moins un additif choisi dans le groupe constitué d'agents de nucléation, d'agents de démoulage, de tensioactifs, de stabilisants, d'agents antichoc, d'agents de renforcement, d'agents antistatiques, d'antioxydants, de plastifiants, de lubrifiants, de charges et de colorants.

**14.** Article façonné produit à partir d'une composition suivant la revendication 1.

**15.** Article façonné produit à partir d'une composition suivant la revendication 9.

**16.** Procédé pour la réduction de la concentration de formaldéhyde d'une pièce moulée à partir d'une résine de polyacétal, comprenant:

(a) la formation d'une composition comprenant (i) une résine de polyacétal et (ii) un ou plusieurs éléments du groupe d'additifs réducteurs d'odeur constitué:

(A) de succinimide; et
(B) d'un composé amino soluble dans l'eau primaire ou secondaire à bas poids moléculaire de basse

volatilité, contenant au moins un groupe amino et deux atomes de carbone ou plus et présentant un pKb dans l'intervalle de 2-8, à l'exception de et en excluant ces composés amino décrits par la formule:

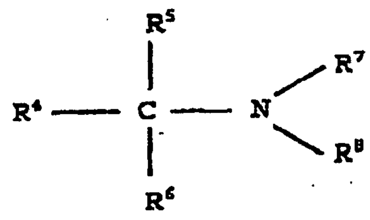

dans laquelle $R^4$, $R^5$ et $R^6$ sont choisis dans la classe constituée de groupes hydroxyalkyles contenant 1-4 atomes de carbone et de groupes alkyles contenant 1-9 atomes de carbone, et les groupes $R^7$ et $R^8$ sont choisis dans la classe constituée d'hydrogène et de groupes alkyles contenant 1-4 atomes de carbone;

dans laquelle le composé amino de basse volatilité est **caractérisé par** $T_{bp} > T_m - 60°C$, où $T_{bp}$ est le point d'ébullition du composé amino et $T_m$ est le point de fusion de la résine de polyacétal; et

dans laquelle la composition est **caractérisée par** une concentration de formaldéhyde à la température ambiante qui est inférieure à environ 50% de la concentration de formaldéhyde de la résine de polyacétal seule; et

(b) le moulage de la pièce à partir de la composition.

**17.** Procédé suivant la revendication 16, comprenant en outre l'étape de sélection comme composé amino d'un élément du groupe constitué de diéthanolamine, de *p*-aminobenzoate d'éthyle, d'anthranylate de méthyle, de *m*-aminobenzoate de butyle et de mélanges de ceux-ci.

**18.** Procédé suivant la revendication 16, comprenant en outre l'étape de sélection comme composé amino de *p*-aminobenzoate d'éthyle.

**19.** Procédé pour la réduction de la concentration de formaldéhyde d'une pièce moulée à partir d'une résine de polyacétal, comprenant:

(a) la formation d'une composition comprenant (i) une résine de polyacétal et (ii) de l'acide anthranilique, de l'acide 4-aminobenzoïque ou un mélange de ceux-ci; dans laquelle la composition est **caractérisée par** une concentration de formaldéhyde à la température ambiante qui est inférieure à environ 50% de la concentration de formaldéhyde de la résine de polyacétal seule; et

(b) le moulage de la pièce à partir de la composition.